# EUROPEAN PATENT APPLICATION

(11) **EP 4 261 488 A1**
(43) Date of publication of application: **18.10.2023**
(21) Application number: 22167791.7
(22) Date of filing: 12.04.2022
(51) Int. Cl.: F28D 20/00

(54) **THERMAL ENERGY STORAGE SYSTEM**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Zaczek, Alexander, 20095 Hamburg (DE)
(74) Representative: SGRE-Association

(57) **Abstract**

A thermal energy storage system (2) is provided. The thermal energy storage system (2) comprises an energy storage device (6) configured to store thermal energy; a heat source arrangement (21); and a charging flow path (28) configured to provide thermal energy from the heat source arrangement to the energy storage device (6) via a heat transfer medium. The thermal energy storage system (2) is operable in a charging mode in which the heat transfer medium is transported along the charging flow path (28). The heat source arrangement (21) comprises a first heat source (22) and a second heat source (24) being arranged in series in the charging flow path (28), wherein the first heat source (22) is configured to heat the heat transfer medium to an intermediate temperature and the second heat source (24) is configured to heat the heat transfer medium leaving the first heat source (22) to a final temperature being higher than the intermediate temperature.

## Description

### FIELD OF THE INVENTION

The present invention provides a thermal energy storage system and a method of operating such a thermal energy storage system.

### BACKGROUND

Thermal energy storage systems with an energy storage device are well known in the prior art. These systems are used for storing thermal energy in an energy storage device (charging mode) by transferring thermal energy from a heat source to the energy storage device with a heat transfer medium. During discharging, these systems transfer thermal energy stored in the energy storage device to a heat consumer by means of the heat transfer medium. Such system is for example described in the document EP3102796A1.

The medium flowing through the heat source is heated by the heat source to a temperature required for charging the energy storage device. Therefore, the heat source has to cover a high operating temperature range for heating the incoming medium. A heat source with such high temperature requirements such as an electrical heater may be expensive, may have high electric power consumption resulting in high energy costs and/or may require a high power capability of the mains connection.

### SUMMARY

Accordingly, there is a need to mitigate at least some of the drawbacks mentioned above and to provide a thermal energy storage system that is more versatile. There is further a need to use such thermal energy storage system more efficiently.

This need is met by the features of the independent claims. The dependent claims describe embodiments of the invention.

According to an embodiment of the invention, a thermal energy storage system is provided. The system comprises an energy storage device configured to store thermal energy, a heat source arrangement, and a charging flow path configured to provide thermal energy from the heat source arrangement to the energy storage device via a heat transfer medium (herein also called 'medium'), wherein the thermal energy storage system is operable in a charging mode in which the heat transfer medium is transported along the charging flow path. The heat source arrangement comprises a first heat source and a second heat source being arranged in series in the charging flow path, wherein the first heat source is configured to heat the heat transfer medium to an intermediate temperature and the second heat source is configured to heat the heat transfer medium leaving the first heat source to a final temperature being higher than the intermediate temperature.

By providing a first and a second heat source arranged in series, a low temperature heat source, e.g. a waste heat source, can be included in the system that would alone not or not efficiently reach the desired final temperature. The first (e.g. low temperature) heat source may have an energetic and/or exergetical and/or economic advantage compared to those heat sources that are required to reach the final temperature.

In an exemplary solution the temperature range generable by the first heat source may be in the range of ambient to 600°C and the temperature generable by the second heat source may be in the range from 150°C to 1000°C.

The thermal energy storage system may become less expensive, since the thermal energy storage system with two heat sources according to an embodiment may heat the medium in stages (i.e. first heat source heats medium to intermediate temperature, second heat source heats medium to final temperature) and thus the first and second heat sources do not have to cover the whole operating temperature range. In contrast, a system with only a single heat source would alone have to heat the heat transfer medium until the final temperature is reached. A single heat source being capable of covering such a high operating temperature range is expensive, and many available heat sources cannot be used.

The system may have an economic advantage in comparison to a single heat source, since the energy costs may be reduced as the operating range of the second heat source may be reduced. Thus, higher revenues may be achieved for the user. In particular, the combination of the first and second heat sources may reduce the required electric power consumption in comparison to a single heat source (e.g. a resistive heater). Also, the required power capability of the mains connection of the electrical heater may be reduced. Thus, by providing the first and second heat sources, the price of such a system and thus the investment costs (capital expenditure) for such a system and/or the charging cost for charging the energy storage device of such a system may be reduced.

Further, by providing the first and second heat sources, heat sources of the same or different type may be combined with each other. Thus, the choice of heating sources may be made flexibly and may take into account economic and technical criteria. It may be possible to respond flexibly to market opportunities and existing infrastructure.

In an embodiment, the first heat source may be only available for a limited time as e.g. a waste stream in a waste heat source or the energy generated by a solar energy heat source. In particular, a solar energy heat source may have a specific temperature profile as e.g. such heat source does not generate energy at night.

By providing the second heat source, the second heat source may heat the medium up to the final temperature or if the first heat source is not available from the beginning of the heating, the second heat source may temporarily entirely take over the heating of the heat transfer medium.

If one heat source, in particular the first heat source, provides medium at fluctuating temperatures (i.e. no constant medium temperature at the outlet of the first heat source), the provision of the second heat source may compensate the fluctuations.

The heat transfer medium leaving the second heat source may be directed to an inlet of the energy storage device for charging the energy storage device.

The final temperature is preferably a predetermined final temperature, in particular the temperature required for charging the energy storage device (storage charging temperature). The charging temperature may be in the range between 300 °C and 1000 °C, preferably between 500 °C and 1000 °C, more preferably between 600°C and 900°C.

The charging flow path is preferably configured to guide the heat transfer medium through the energy storage device in a first flow direction to increase the amount of thermal energy stored in the energy storage device.

The system may further comprise a discharging flow path configured to provide thermal energy from the energy storage device to a heat consumer via the heat transfer medium, wherein the thermal energy storage system is operable in a discharging mode in which the heat transfer medium is transported along the discharging flow path.

Preferably, the discharging flow path is configured to guide the heat transfer medium through the energy storage device in a second flow direction that is opposite to the first flow direction.

Preferably, the charging and discharging flow paths are configured such that the heat transfer medium is at least partly transported in both modes along same passages through a heat storage material of the energy storage device.

In an example, at least one of the first and second heat sources is controllable to provide the final temperature at the outlet of the second heat source. Preferably, the second heat source is a controllable heat source, e.g. a resistive heat source.

By providing a second heat source as a controllable heat source, it may be ensured that the medium leaving the second heat source has the final temperature required for charging the energy storage device. In particular, the final temperature provided by the second heat source may be kept in a predetermined range no matter at which temperature the heat transfer medium leaving the first heat source enters the second heat source. The final temperature of the second heat source preferably corresponds to the desired inlet temperature of the energy storage device. This may allow efficient charging of the energy storage device without fluctuations in the temperature of the heat transfer medium.

In particular, if the first heat source is a heat source providing fluctuating temperature (such as e.g. a waste or solar thermal heat source) such that the temperature at which the heat transfer medium leaves the first heat source fluctuates, the second heat source is preferably a controllable heat source for compensating the fluctuations.

Thus, the fluctuations of the first heat source may be compensated by the controllable second heat source and the desired final temperature for charging the energy storage device may be ensured.

By providing a first heat source being a controllable heat source, a constant temperature at the inlet of the second heat source may be ensured.

In an embodiment, the first heat source is at least one of a waste heat source, a solar thermal heat source, a geothermal heat source, a flue gas heat source, or a heat pump, and/or the second heat source is at least one of a fuel powered heat source (for example powered by hydrogen, bio-gas, natural gas, ethanol, ammonia, peat, hard coal, lignite, wood, wood pellets, gasoline, and/or oil), an electrical or a waste heat source, e.g. an electrical heater, or one or more plasma torches.

The combination of two heat sources, e.g. a waste heat source and an electrical (resistive) heat source may reduce the required electric power consumption for the resistive heat source in comparison to a system in which a single resistive heater is used for heating the heat transfer medium to the final temperature. This may also reduce the size of the grid connection needed.

The first heat source, e.g. a solar thermal heat source, may be a heat source which is configured to heat the medium to the intermediate temperature (i.e. cannot heat the heat transfer medium to the final temperature which may be required for charging the energy storage device). In this case, the second heat source may heat the heat transfer medium leaving the first heat source at the intermediate temperature to the final temperature.

In an example, the first heat source is a waste heat source configured to heat the heat transfer medium to the intermediate temperature by waste heat provided to the first heat source from an external system. Alternatively or additionally, a medium may be fed from the outside such as an external system into the first heat source.

The first heat source may for example include a heat exchanger configured to provide a heat exchange with a working fluid or exhaust medium of an external cycle or process or system, such as a working fluid of a solar thermal plant or an exhaust medium leaving an industrial process (e.g. steam, exhausted combustion gases or the like). In other implementations, the first heat source may be configured to directly receive heated heat transfer medium from such external cycle or process, i.e. the heat transfer medium (e.g. heated gas or flue gas) may be provided at elevated temperature and may enter the charging flow path at the first heat source.

In an embodiment, the heat source arrangement comprises a third heat source configured to heat the heat transfer medium to the or another intermediate temperature or to the final temperature, wherein preferably the third heat source is arranged, in the charging flow path, in parallel to at least one of the first heat source and the second heat source.

The third heat source may be used for heating the medium, e.g. if the first heat source is a heat source which is not permanently available such as a solar thermal energy source and/or a waste source, and/or provides fluctuating temperatures, and/or is not able to provide a constant outlet temperature, and/or has a limited power which is not sufficient for reaching a desired final temperature.

For example, the first heat source is a solar thermal energy source or a waste heat source, and/or the third heat source is a heat source different from the first heat source, e.g. a heat pump or a resistive heater or another waste heat source.

In an example, the third heat source may be arranged in parallel to the second heat source. The heat transfer medium may branch off downstream (with respect to the flow direction in the charging mode) of the first heat source and may flow through the second heat source and/or the third heat source.

'Downstream' means 'in flow direction behind' with respect to the flow direction of the heat transfer medium in the charging or discharging flow path. 'Upstream' means 'in flow direction before' with respect to the flow direction of the heat transfer medium in the charging or discharging flow path.

The heat source, in particular the first and/or third heat source may be provided with energy from a renewable energy source. Such renewable energy source may for example be a wind turbine, a solar energy converter, or a hydro power plant. A solar energy converter may for example directly provide thermal energy for heating the heat transfer medium during the charging cycle. In other implementations, the renewable energy may first be converted to electricity, and the respective electricity may be used for heating the heat transfer medium during the charging cycle (via such electrical heater). It should be clear that in other implementations, the electricity for heating the heat transfer medium during the charging cycle may come from different sources. The heat source, preferably the third heat source, may be an electrical heater that converts electrical energy into thermal energy. It may additionally or alternatively comprise a heat exchanger that for example provides heat exchange between a working fluid (e.g. of a solar plant, of an industrial process, or the like, such as an exhaust gas or waste heat) and the heat transfer medium. The heat source may additionally or alternatively comprise a heat pump.

In an embodiment, the third heat source is arranged, in the charging flow path, in parallel to the first heat source, and the thermal energy storage system comprises a control unit configured to control the system in the charging mode such that the system is operable in at least one, preferably each, of the following heating modes:
- a first serial heating mode in which the heat transfer medium only flows within the heat source arrangement through the first heat source and through the second heat source,
- a second serial heating mode in which the heat transfer medium only flows within the heat source arrangement through the third heat source and through the second heat source, and
- a parallel heating mode in which a first part of the heat transfer medium flows through the first heat source and a second part of the heat transfer medium flows in parallel through the third heat source, and wherein outlets of the first and third heat sources are combined such that the first and the second parts mix and the mixed flow flows through the second heat source.

In the first serial heating mode, the heat transfer medium leaving the first heat source may be directed downstream of the first heat source through the second heat source (downstream with respect to the flow direction in the charging mode). The first serial heating mode may be used whenever the first heat source, e.g. a waste heat source, is available.

In the second serial heating mode, the heat transfer medium leaving the third heat source may be directed downstream of the third heat source through the second heat source (downstream with respect to the flow direction in the charging mode). The second serial heating mode, i.e. medium flows through the third heat source, may be used if the first heat source is not available, or if the first heat source has a limited power which is not enough for heating the heat transfer medium to a desired temperature before entering the second heat source.

In the parallel heating mode, the heat transfer medium may branch off downstream (with respect to the flow direction in the charging mode) of the energy storage device and may flow through the first and third heat sources. The first and second parts of the heat transfer medium leaving each of the first and third heat sources may be directed to a branching point, where both parts may mix with each other.

The mixed flow of the medium may be directed to the second heat source to further heat the medium if e.g. the desired temperature (final temperature for charging the energy storage device) of the medium is not reached. Alternatively, the mixed flow of the medium may be directed through the second heat source, wherein the second heat source is in an off state (i.e. the medium flowing through the second heat source is not heated by the second heat source), e.g. when the temperature of the mixed medium has already reached the desired final temperature (charging temperature).

The control unit may control or adjust control valves such that the medium is directed within the heat source arrangement along any of the paths of the above or below mentioned heating modes.

In an embodiment, the heat source arrangement comprises a bypass conduit arranged in parallel to the second heat source in the charging flow path, wherein an outlet of the bypass conduit is combined with an outlet of the second heat source and/or fluidly coupled to an inlet of a heat consumer. An inlet of the bypass conduit may be fluidly connected to an outlet of the first heat source. If a third heat source is arranged in parallel to the first heat source in the charging flow path, the inlet of the bypass conduit may be fluidly coupled to an outlet of at least one of the first and third heat sources, preferably of both.

The heat transfer medium leaving the first and/or third heat source may be directed along the bypass conduit, such that the heat transfer medium bypasses the second heat source.

In an embodiment, the heat consumer may be an industrial process. In particular, such industrial process may be a chemical process, an electro-chemical process, or a physical process, in particular a drying process, a melting process or a forging process. Each outlet port of the discharging flow path may accordingly be configured to provide the thermal energy via the heat transfer medium to such industrial process, which in particular can be selected from the above examples.

Preferably, the heat consumer is a steam generator (in particular a heat recovery steam generator, HRSG) that generates steam during the discharging mode, in particular steam that is suitable for powering a steam turbine configured to convert stored thermal energy into electrical energy. The steam generator may also be termed main steam generator and may be configured to generate steam having a temperature of higher than 400°C at a pressure of more than 100 bar. The heat consumer may be operable during the discharging mode and/or charging mode. The heat consumer may be configured to convert stored thermal energy into electrical energy such as in a water vapor cycle, a Stirling-cycle, a Brayton-cycle or the like. Alternatively, the heat consumer may be configured to generate other energy carriers such as ammonia, hydrogen by means of high-temperature electrolysis or the like by using the stored thermal energy.

In an embodiment, the system comprises a control unit configured to control the system in the charging mode such that the system is operable in at least one, preferably each, of the following heating modes:
- a first bypass heating mode in which a first part of the heat transfer medium flows through the first heat source and a second part of the heat transfer medium flows through the third heat source, and the first and second parts bypass the second heat source via the bypass conduit,
- a second bypass heating mode in which the first part of the heat transfer medium flows through the first heat source and the second part of the heat transfer medium flows through the third heat source, and then the first part of the heat transfer medium flows through the second heat source and the second part of the heat transfer medium flows along the bypass conduit, and/or
- a general bypass heating mode in which the heat transfer medium flows through the bypass conduit and bypasses the second heat source (e.g. if no third heat source is provided).

In the first bypass heating mode, the first and second parts of the medium leaving the first and third heat sources may be directed downstream of the first and third heat sources along the bypass conduit (downstream with respect to the flow direction in the charging mode).

In the first bypass heating mode, the first and second part of the heat transfer medium leaving the first and third heat sources may be directed to a branching point, where both parts of the medium may mix with each other. The mixed flow may be directed along the bypass conduit, while bypassing the second heat source, in particular, if e.g. the temperature of the mixed medium has already reached the desired charging temperature.

In the second bypass heating mode, the first part of the medium leaving the first heat source may be directed downstream of the first heat source through the second heat source, and the second part of the medium may be directed downstream of the third heat source along the bypass conduit (downstream with respect to the flow direction in the charging mode).

In the second bypass heating mode, the first and second parts of the medium leaving the first and third heat sources may be isolated from each other, e.g. by an on/off valve being in an off state or alternatively the first and second part are not fluidly connected with each other. The first part of the medium leaving the first source may be further heated to the final temperature in the second heat source. The second part of the medium leaving the third heat source may already have reached the final temperature and thus may be directed along the bypass conduit. The first part of the medium leaving the second heat source and the second part of the medium flowing along the bypass conduit may mix with each other downstream at a branching point and the mixed flow of the medium may be directed to the inlet of the energy storage device.

In an example, the control unit is configured to operate the system in a direct heating mode in which thermal energy is provided to the heat consumer by directing at least one part of the heat transfer medium flowing through the bypass conduit to the heat consumer.

Only the heat transfer medium leaving the third heat source, preferably at the intermediate temperature, may be directly provided to the heat consumer via the bypass conduit. Thus, the heat consumer may be supplied with thermal energy also during the charging of the energy storage device.

In an embodiment, the heat transfer medium is a gaseous medium, in particular air or nitrogen. Air is cost efficient and readily available, and the medium may thus be replenished from the environment. Accordingly, heat transfer medium may be taken into the system by simply drawing the medium from the ambient air, and after the heat transfer medium has passed on the thermal energy to the respective process, it may be exhausted back into the air. Confinement of the heat transfer medium is thus simple to implement. Also, it is environmental-friendly, as the heat transfer medium cannot contaminate the environment.

The thermal energy storage system may further comprise at least one blower configured to convey the heat transfer medium along the charging flow path in the charging mode and/or to convey the heat transfer medium along the discharging flow path in the discharging mode. Preferably one blower is provided for conveying (i.e. transporting) the medium along the charging and discharging path. The blower may be arranged downstream of the energy storage device.

In particular, along the charging flow path, the heat transfer medium is circulated from the blower through the heat source arrangement, the energy storage device, and back to the blower. Thereby, the heat transfer medium provides thermal energy to the energy storage device. In particular, along the discharging flow path, the heat transfer medium is circulated from the blower through the energy storage device, the heat consumer and back to the blower. Thereby, thermal energy is transferred from the energy storage device to the heat transfer medium and the heat transfer medium may provide heat to the heat consumer.

The output of the at least one blower may have the same flow direction in the charging and discharging mode. At least one control valve may be provided downstream of the at least one blower to separate the flow paths into the charging and the discharging flow paths. Further control valves, e. g. three way valves, on/off valves or proportional valves, may be provided upstream of the at least one blower. The control unit may be configured to control the control valves such that in charging mode, the heat transfer medium flows along the charging flow path and in discharging mode, the heat transfer medium flows along the discharging flow path. The control valves may be arranged and controlled such that the flow direction through the blower stays the same while the flow direction through the energy storage device is reversed when switching from the charging cycle to the discharging cycle.

In other configurations, at least one blower may be used for the charging flow path and at least one blower for the discharging flow path. Further blowers may be provided, e.g. for redundancy, for boosting or if the pressure drop is too large along the charging/discharging flow path. Preferably, the at least one blower is arranged in the charging flow path downstream of the energy storage device and upstream of the heat source arrangement with regard to the flow direction in the charging flow path, and is arranged in the discharging flow path downstream of the heat consumer and upstream of the energy storage device with regard to the flow direction in the discharging flow path. Thereby, the same blower may be used for transporting the medium in the charging and discharging flow paths. This is efficient and reduces costs for further blowers.

The thermal energy storage system may in particular be configured to controllably operate in the charging mode, the discharging mode, and an idle mode. Alternating flows of heat transfer medium in opposite directions or in the same direction through the energy storage device are thereby generated to deposit thermal energy in or extract thermal energy from the energy storage device. In the charging mode, no heat transfer medium may be passed towards the heat consumer. In the discharging mode, no heat transfer medium may be passed through the heat source arrangement, the heat source arrangement may be in standby/switched off.

The thermal energy storage system may furthermore be configured to operate in a partial charging mode in which the heat transfer medium is transported along the charging flow path and in which a fraction of the heat transfer medium that has taken up thermal energy from the heat source arrangement is passed to the heat consumer (preferably medium leaving the first and/or third heat source may be at least partially directed to the heat consumer). By such partial charging mode, the heat consumer can be supplied with thermal energy also during the charging of the energy storage device.

The thermal energy storage system may furthermore be configured to operate in a supported discharging mode in which the heat transfer medium is transported along the discharging flow path and in which an additional flow of heat transfer medium is provided from the heat source arrangement to the heat consumer to transport thermal energy from the heat source arrangement to the heat consumers. The amount of thermal energy available to the heat consumer during discharging can thereby be increased.

The charging/discharging flow paths may be implemented by respective pipes or other conduits through which the heat transfer medium may flow. Such pipes or conduits may in particular be heat insulated pipes or conduits, for example externally or internally insulated pipes or conduits. Heat losses during transportation of the heat transfer medium may thus be kept low.

The charging flow path may implement a closed cycle that is configured to return the heat transfer medium leaving the energy storage device at least partially, preferably fully, back to the heat source arrangement so as to increase the amount of thermal energy comprised in the heat transfer medium.

The discharging flow path may implement a closed cycle that is configured to return the heat transfer medium that has provided thermal energy to the heat consumer at least partially, preferably fully, back to the energy storage device to take up thermal energy stored in the energy storage device.

In an embodiment, the energy storage device comprises a storage chamber. The storage chamber may comprise at least one first port operated as an inlet for the heat transfer medium in the charging mode and as an outlet for the heat transfer medium in the discharging mode and/or at least one second port operated as an outlet for the heat transfer medium in the charging mode and as an inlet for the heat transfer medium in the discharging mode. The energy storage device may further comprise a heat storage material disposed in the storage chamber. The heat storage material may have open pores and/or may provide flow channels through which the heat transfer medium may flow and exchange thermal energy with the heat storage material.

In particular, the storage material may comprise or consist of gravel, rocks, rubble, sand, grit, bricks, stone, lava stone, granite, basalt, slag and/or ceramics, or a combination thereof, and may be provided as bulk material (it may be configured as pebble bed).The heat storage device can thus be provided cost efficiently while being capable of storing large amounts of thermal energy.

Preferably, the medium flows through same passages within the heat storage material in discharging and charging mode. More preferably, the medium within the energy storage device is in direct contact with the heat storage material to exchange heat with the storage material.

The thermal energy storage system may be configured to store thermal energy in the energy storage device at a temperature between 300 °C and 1000 °C, preferably between 500 °C and 1000 °C, more preferably between 600°C and 900°C when the thermal energy storage device is in a charged state. For example, the temperature in the charged energy storage device may be kept between 650 and 800°C. It should be clear that the temperature can be significantly lower if the storage device is discharged.

In the discharging flow path, the temperature of the heat transfer medium leaving the energy storage device may lie within the range of about 500°C to 900°C, preferably 600°C to 800°C.

In the charging mode, heat transfer medium that has been heated by the heat source passing through the energy storage device and thereby heats the heat storage material, such that after heating the heat storage material a cooler medium being exhausted from the energy storage device. After the charging is completed, the storage device may be left in a standstill period of hours or even days until the stored thermal energy is needed (also called idle mode, in which no active or actively driven flow of medium through the energy storage device is present). In the discharging mode, the flow direction may be the same as in the charging mode or may be reversed, so that colder heat transfer medium (e.g. air) is introduced into the port that acted as outlet in the charging mode. The heat storage material transfers heat to the heat transfer medium, which leaves the energy storage device at the other (hot) end through the port that acted as inlet in the previous charging mode. The storage device may thus have a hot port (inlet for charging and outlet for discharging) and a cold port (inlet for discharging and outlet for charging). For a modified distribution of the medium within the storage, the energy storage device may include a plurality of hot ports and/or a plurality of cold ports.

In particular, the thermal energy storage system may be configured such that during the charging cycle of the storage chamber, a temperature front travels through the heat storage material from the hot end to the cold end of the chamber. The temperature front is a zone of strong temperature gradient in the heat storage material, which separates the hot and the cold zones in the chamber. The charging of the respective storage chamber will preferably be stopped when the temperature at the cold end begins to rise above a predetermined temperature threshold.

The energy storage device may in particular be configured as described in the document EP3102796A1.

According to a further embodiment of the invention, a method of operating a thermal energy storage system, in particular a thermal energy storage system as described herein, is provided. The thermal energy storage system comprises an energy storage device configured to store thermal energy, a heat source arrangement, and a charging flow path configured to provide thermal energy from the heat source arrangement to the energy storage device via a heat transfer medium. The heat source arrangement comprises a first heat source and a second heat source being arranged in series in the charging flow path, wherein the first heat source is configured to heat the heat transfer medium to an intermediate temperature and the second heat source is configured to heat the heat transfer medium leaving the first heat source to a final temperature being higher than the intermediate temperature. The method comprises operating the thermal energy storage system in a charging mode in which the heat transfer medium is transported along the charging flow path.

Preferably, the method further comprises controlling at least one of the first and second heat sources such that the heat transfer medium leaving the second heat source has the final temperature, in particular a predetermined final temperature.

It should be clear that the method may be performed by the thermal energy storage system in any of the configurations described herein. Furthermore, the method may further comprise any of the steps described herein with respect to the system. Likewise, the thermal energy storage system may be configured to carry out the method in any of the implementations disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic diagram showing a thermal energy storage system according to an embodiment.
Fig. 2 is a schematic diagram showing a thermal energy storage system according to a further embodiment in a first serial heating mode.
Fig. 3 is a schematic diagram showing the thermal energy storage system of Fig. 2 in a second serial heating mode.
Fig. 4 is a schematic diagram showing the thermal energy storage system of Fig. 2 in a parallel heating mode.
Fig. 5 is a schematic diagram showing the thermal energy storage system of Fig. 2 in a first bypass heating mode.
Fig. 6 is a schematic diagram showing the thermal energy storage system of Fig. 2 in a second bypass heating mode.
Fig. 7 is a schematic drawing showing an energy storage device according to an embodiment.
Fig. 8 is a flow diagram illustrating a method of operating a thermal energy storage system according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

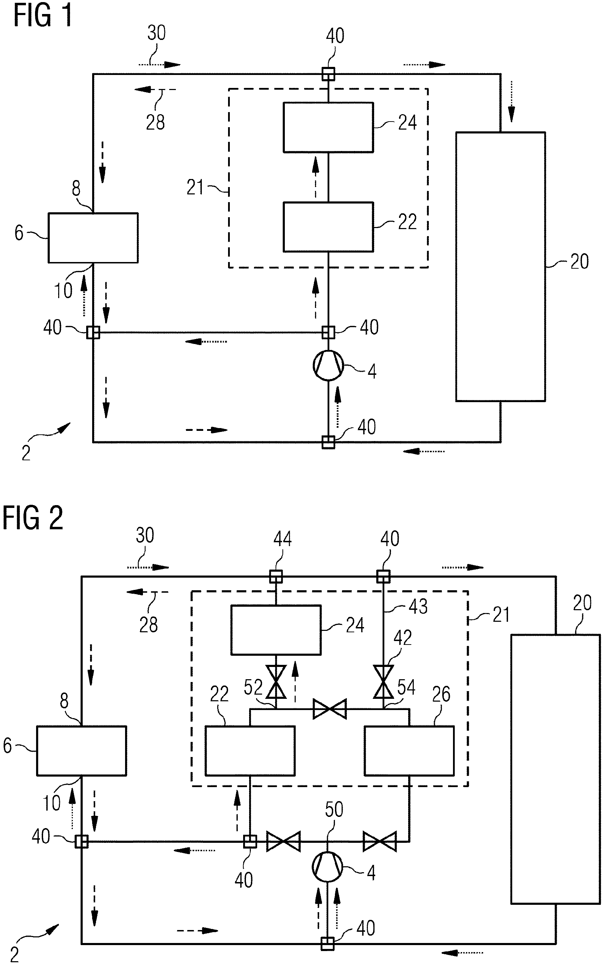

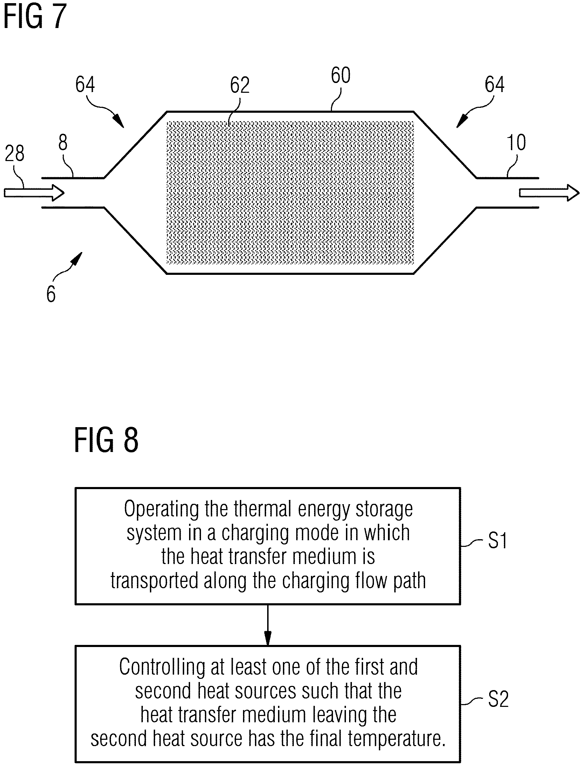

Fig. 1 schematically shows a thermal energy storage system 2 according to an embodiment. The thermal energy storage system 2 includes an energy storage device 6 that is configured to store thermal energy, i.e. energy in the form of heat. To deposit thermal energy in the storage device 6 when operating the thermal energy storage system 2 in a charging mode, a heat source arrangement 21 heats a heat transfer medium (i.e. increases its temperature), which is transported along a charging flow path 28 from the heat source arrangement 21 to the energy storage device 6. The heated heat transfer medium flows via a first port 8 through the storage device 6 and transfers heat to a heat storage material 62 (see Fig. 7) of the energy storage device 6. In other words, the heat transfer medium heats up the heat storage material and is thus cooled down, so that it leaves the storage device 6 through a second port 10 at lower temperature. The charging flow path 28 is preferably implemented as a closed cycle, so that the heat transfer medium is cycled back to the heat source arrangement 21 for again taking up thermal energy. The system 2 may include a blower 4 that transports or conveys the heat transfer medium.

The heat source arrangement 21 may comprise a first heat source 22 and a second heat source 24 arranged downstream of the first heat source (i.e. first and second heat sources 22, 24 are arranged in series) with respect to the flow direction of the medium in the charging mode. The first heat source 22 may be configured to heat the heat transfer medium to a intermediate temperature and the second heat source 24 may be configured to heat the heat transfer medium leaving the first heat source 22 at the intermediate temperature to a final temperature. The final temperature is preferably the charging temperature required for charging the energy storage device 6. By providing the first and second heat sources 22, 24 in series, heat sources (low temperature heat sources as e.g. solar energy, waste heat sources) may be used which alone cannot heat the medium to the required final temperature. As the first heat source 22 heats the medium to an intermediate temperature, the temperature range needed by the second heat source 24 may be reduced, and the second heat source 24 may be less expensive.

The first heat source 22 may for example include an electrical heater, a heat exchanger, a waste heat source or the like. The first heat source 22 may in particular obtain energy from a renewable source, such as wind or solar power, hydro power and the like. As an example, a solar power plant may heat up a respective medium, which transfers its thermal energy to the heat transfer medium circulated along a charging flow path (e.g. via a respective heat exchanger). As another example, a wind power plant which may include one or more wind turbines produces electrical energy, which is transformed into thermal energy by means of a heater. Heat source 22 may accordingly include a respective heat exchanger or heater, which may form part of the system 2. Another possible implementation of the heat source 22 is a heat pump.

It should be clear that thermal energy may also be obtained from other sources, such as a conventional power plant, waste heat from an industrial process or the like. The second heat source may be e.g. a resistive heater or a plasma heat source or may be a heat source that is provided with energy from an external system or process or may be an external heat source that is coupled to the system 2.

The charging flow path 28 accordingly includes a flow connection from an outlet of the second heat source 24 to the first port 8 (acting as an inlet) of the energy storage device 6, a flow connection from the second port 10 (acting as an outlet) of storage device 6 to an inlet or suction side of the blower 4, a flow connection from an outlet or blowing side of the blower 4 to an inlet of the first heat source 22, and a flow connection from an outlet of the first heat source 22 to an inlet of the second heat source 24. The charging flow path 28 is indicated with dashed arrows in the Figures. Heat transfer medium is thus conveyed in a closed cycle, wherein any medium that is lost may for example be replaced from a fresh air port.

For extracting stored thermal energy from the energy storage device 6 when operating the system 2 in a discharging mode, a discharging flow path 30 is provided, which is indicated by dotted arrows in the Figures. In Fig. 1, the heat transfer medium is transported (or pumped) by the blower 4 via the second port 10 (acting as an inlet) into the energy storage device 6, in which stored thermal energy is transferred to the heat transfer medium. The heat transfer medium flows through the energy storage device 6 and leaves the device 6 through the first port 8 (acting as an outlet). The heated (or energized) heat transfer medium is then transported towards a heat consumer 20. The discharging flow path thus at least includes a flow connection from the blower 4 to the second port 10 of energy storage device 6, and a flow connection from the first port 8 of the energy storage device 6 to the heat consumer 20.

The thermal energy storage system 6 may include a control unit that is configured to operate the thermal energy storage system 2 alternatingly in the charging mode and the discharging mode. It may further be configured to operate the system 2 in the above-mentioned partial charging mode, supported discharging mode and/or direct heating mode. For this purpose, controllable valves 40 may be provided that direct the flow of heat transfer medium either along the charging flow path (dashed arrows) or along the discharging flow path (dotted arrows) under control of the control unit. The control unit may further be configured to direct all or a fraction of heat transfer medium that has been energized by the heat source arrangement 21 directly to the heat consumer 20 by controlling respective valves, e.g. in combination with directing the flow of medium along the charging flow path or along the discharging flow path, in order to implement the further modes of operation. The valves 40 may be controllable three-way valves, while other solutions are certainly conceivable. A three-way valve may for example direct the heat transfer medium from blower 4 either towards the heat source arrangement 21 (charging mode) or towards the storage device 6 (discharging mode). A further three-way valve 40 may be provided downstream of the heat source arrangement 21, and in particular of the second heat source 24, and the valve 40 may direct the flow of heat transfer medium either towards the energy storage device 6 (charging mode), or may direct a flow of heat transfer medium from the energy storage device 6 towards the heat consumer 20 (discharging mode). A further three-way valve 40 may direct heat transfer medium leaving the storage device 6 through the second port 10 towards the blower 4 (charging mode), or may direct heat transfer medium coming from blower 4 towards the second port 10 into the storage device 6 (discharging mode). It should be clear that implementations other than three-way valves are certainly possible, for example directional valves and simple on/off valves may be used.

The flow path of the heat transfer medium through the energy storage device 6 may substantially be the same for the charging flow path and the discharging flow path (although the heat transfer medium is transported in opposite directions). In particular, the same heat transfer medium may be employed in a charging flow path and the discharging flow path. Preferably, the heat transfer medium is air. The heat transfer medium is thus cost-efficient and can simply be replaced with air from the ambient environment. Likewise, as the energy storage device 6 does not require separate circuits for effecting a heat exchange between a charging and a discharging flow path, it is simple to implement and further cost-efficient. Further, it allows a simple up-scaling, so that substantial amounts of thermal energy can be stored.

As indicated in Fig. 1, both for the charging flow path and the discharging flow path, the heat transfer medium passes in the same direction through the blower 4. Blower 4 thus needs to be operated only in one direction and allows an efficient transportation or conveyance of the heat transfer medium. It should be clear that in other configurations, two separate blowers may be provided, one for the charging flow path and one for the discharging flow path. Also, it is possible to provide redundant blowers or parallel blowers to increase the flow capacity. This may also be applicable to the embodiment shown in the following Figures.

The flow conduits for flow lines may for example be provided by respective pipes or conduits, which are preferably insulated. They may be internally or externally insulated and may for example include a steel pipe with a thermal insulation layer. The heat transfer medium may be transported along the respective flow path at a pressure that is lower than 2 bar, preferably at a pressure that is close to the atmospheric pressure. The pressure may for example lie below 1.3 bar, for example between 0.8 and 1.2 bar.

A respective control unit configured to control valves 40 may include a microprocessor and memory, which stores control instructions which are executed by the processor and which alternatingly operate the system 10 in the charging mode and the discharging mode. Such processor may for example be a digital signal processor, an application specific integrated circuit (ASIC), a microprocessor or the like. The memory may include flash-memory, a hard disk drive, RAM, ROM, and other types of volatile and non-volatile memory. Such control unit may furthermore include input and output interfaces for controlling the valves 40 and for receiving sensor signals. As an example, the temperature in the energy storage device 6 may be monitored to determine when operation in a charging cycle is necessary or when the maximum amount of energy is stored. Likewise, it may determine the heat demand of heat consumers and operate the system 2 accordingly in a discharging mode to supply the respective thermal energy. When heat demand is present while the storage device requires charging, it may operate the system in the partial charging mode to supply thermal energy from the heat source to both, the energy storage device and the heat consumers. If the heat demand of the consumers is larger than what can be supplied by discharging the storage device, then the system can be operated in the supported discharging mode in which thermal energy is additionally provided from the heat source to the consumer 20. The control unit may be further configured to select the operating mode based on economic considerations, such as the cost of energy.

The embodiment of Fig. 2 is a modification of the embodiment of Fig. 1, so that the above explanations are equally applicable. In addition to the system 2 of Fig. 1, the heat source arrangement 21 of Fig. 2 comprises a third heat source 26. The third heat source 26 is arranged in parallel to the first and second heat sources 22, 24. As shown in Fig. 2, the third heat source 26 is arranged in parallel to the first heat source 22.

In the charging flow path 28, the flow connection from the outlet or blowing side of the blower 4 to the heat source arrangement 21 may branch off at a branching point 50 in two flow connections, wherein one flow connection is connected to the inlet of the first heat source 22, and the other flow connection is connected to an inlet of the third heat source 26. Each flow connection from the outlet of the first and third heat source 22, 26 may be connected to each other to a common flow connection. The common flow connection may comprise a branching point 52 directing the heat transfer medium to the inlet of the second heat source 24.

The system 2 may further comprise a bypass conduit 43 arranged in parallel to the second heat source 24. As shown in Fig. 2, the bypass conduit 43 is connected to the common flow connection downstream of the first and third heat sources 22, 26. The common flow connection may comprise another branching point 54 directing the heat transfer medium leaving the first and/or third heat source 22, 26 along the bypass conduit 43 (while bypassing the second heat source 24). The bypass conduit 43 may either direct the heat transfer medium to first port 8 of the energy storage device 6 and/or at least partially to the heat consumer 20.

As mentioned above, control valves 40 may be provided for directing the heat transfer medium either along the charging path 28 or the discharging path 30.

Further, valves such as e.g. on/off valves 42 may be provided in each branch of the heat source arrangement 21 for directing, in the charging mode, the heat transfer medium leaving the blower 4 along different paths within the heat source arrangement 21. Alternatively, or additionally a valve control block 44 may be provided downstream of the second heat source 24 and/or the third heat source 26. The valves 42, 44 may be manually operated, or may be controlled, for example by the above-mentioned control unit of the system 2.

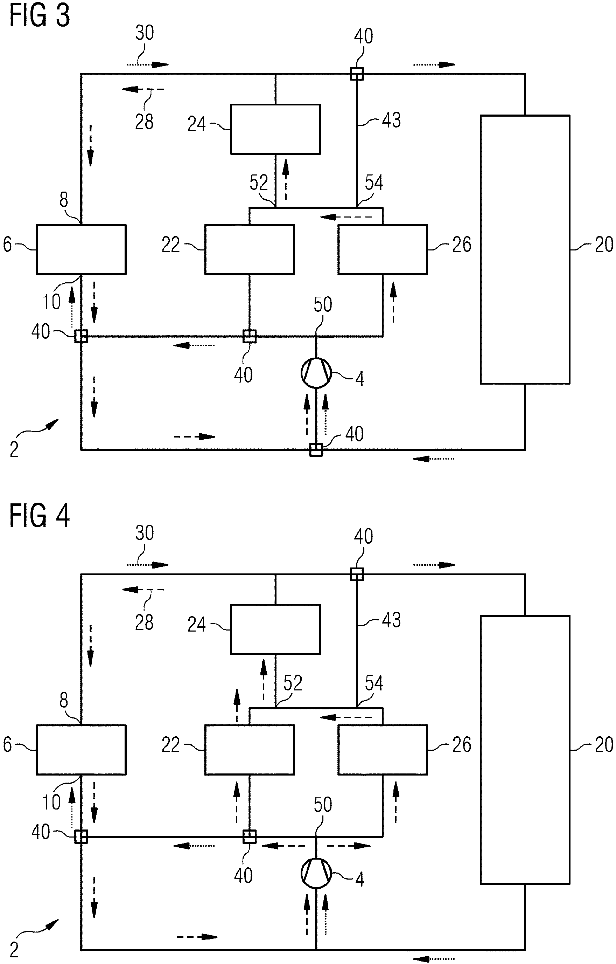

The different heating modes in which the medium is directed along different paths within the heat source arrangement 21 of the system 2 in the charging mode are described in the following with respect to Figures 2 to 6. For simplicity of the heat source arrangement 21, the valves 42, 44 shown in Fig. 2 have been omitted in Figs. 3 to 6, but are also applicable in these Figures.

As shown by the dashed arrows in Fig. 2, in a first serial heating mode, the heat transfer medium leaving the blower 4 is only directed to the first heat source 22 (i.e. no medium is directed to the third heat source 26 arranged parallel to the first heat source 22) and the medium leaving the first heat source 22 is directed to the second heat source 24. From the second heat source 24, the medium may be directed to the energy storage device 6.

As shown by the dashed arrows in Fig. 3, in a second serial heating mode, the heat transfer medium leaving the blower 4 is only directed to the third heat source 26 (i.e. no medium is directed to the first heat source 22 arranged parallel to the third heat source 26) and the medium leaving the third heat source 26 is directed to the second heat source 24. From the second heat source 24, the medium may be directed to the energy storage device 6.

By providing the first and third heat sources 22, 26 in parallel, heat sources may be used which are e.g. not available all the time such as solar energy sources. If e.g. the first heat source is a solar energy source, the medium may be heated by the first heat source 22 (see Fig. 2) in the first serial heating mode and if the first heat source 22 is not available the medium may be heated by the third heat source 26 in the second serial heating mode (see Fig. 3).

As shown by the dashed arrows in Fig. 4, in a parallel heating mode, the medium leaving the blower 4 branches off at branching point 50 into a first part and a second part, wherein the first part may be directed to the first heat source 22 and the second part of the medium may be directed to the third heat source 26. The first and second parts of the medium leaving the first and third heat sources 22, 26 may mix and may be directed via branching point 52 to the second heat source 24. The mixed medium may be heated to the final temperature in the second heat source 24. Alternatively, if the mixed medium has already reached the final temperature, the mixed medium may be directed along the second heat source 24 while the heat source is in an off state (i.e. mixed medium is not heated when passing the second heat source 24).

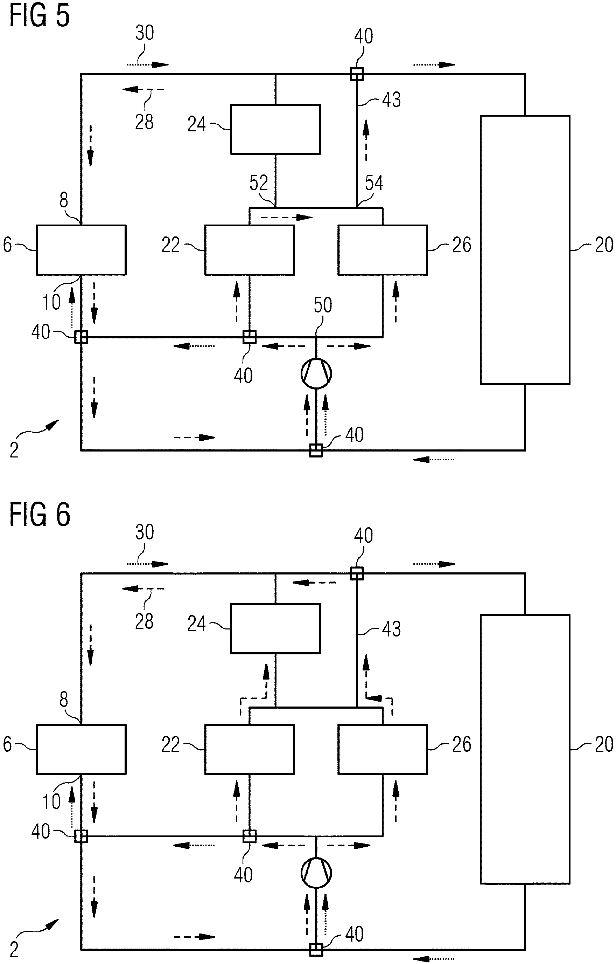

As shown by the dashed arrows in Fig. 5, alternatively, in a first bypass heating mode, the first and second parts of the medium leaving the first and third heat sources 22, 26 may be mixed and may be directed via branching point 54 along the bypass conduit 43. The mixed medium is preferably directed along the bypass conduit 43, if the mixed medium has already reached the final temperature. The medium from the bypass conduit 43 may be directed to the energy storage device 6 and/or to the heat consumer 20. In this case, a control valve block may be provided instead of the valve 40 downstream of the bypass conduit 43. The valve control block may be configured, in the charging mode, to direct at least a part of the medium from the bypass conduit 43 to the energy storage device 6 and/or at least a part of the medium to the heat consumer 20 for providing heat to the heat consumer 20 and/or in the discharging mode, to guide medium from the energy storage device 6 to the heat consumer 20.

As shown by the dashed arrows in Fig. 6, alternatively, in a second bypass heating mode, the first part of the medium leaving the first heat source 22 may be directed to the second heat source 24, and the second part of the medium leaving the third heat source 26 may be directed along the bypass conduit 43. The second part of the medium is preferably directed along the bypass conduit 43 if the medium has already reached the desired final temperature. The second part of the medium flowing along the bypass conduit 43 may be directed to the energy storage device 6, in particular via valve 40. Preferably, the first part and the second part of the medium mix/merge at a branching point, and may be directed together to the energy storage device 6. At the branching point, a valve control block 44 may be provided which may be configured, in the charging mode, to direct the first and/or the second part to the energy storage device 6 and/or in the discharging mode, to guide medium from the energy storage device 6 to the heat consumer 20.

The valve 40 downstream of the third heat source 26 may be configured, in the charging mode, to direct the medium leaving the third heat source 26 to the energy storage device 6 and/or in the discharging mode, to guide the medium from the energy storage device 6 to the heat consumer 20.

Alternatively and/or additionally, in the charging mode, the second part of the medium (i.e. the heat transfer medium flowing along the bypass conduit 43) may be directed at least partially to the heat consumer 20 for providing heat to the heat consumer 20. In this case, a control valve block may be provided instead of the valve 40 downstream of the third heat source 26. The control valve block may be configured, in the charging mode, to direct at least a part of the second part of the medium to the energy storage device 6 and/or at least a part of the second medium to the heat consumer 20 for providing heat to the heat consumer 20 and/or in the discharging mode, to guide medium from the energy storage device 6 to the heat consumer 20.

The control unit may be configured to control the system 2 in the charging mode such that the system 2 is operable in at least one, preferably each, of the above mentioned heating modes, in particular in the first and second serial heating modes (Figs. 2, 3), the parallel heating mode (Fig. 4), the first and second bypass heating modes (Figs. 5, 6).

Fig. 7 illustrates an exemplary implementation of the energy storage device 6. It comprises a storage chamber 60 in which a heat storage material 62 is disposed. The storage chamber 60 may be formed by a housing with walls, yet it may also be formed by simply and excavation that is covered. The heat storage material 62 may be a material that is capable of storing heat at higher temperature and that may be simple and cost-efficiently to obtain such as e.g. rocks or stones or the like (other materials are mentioned above). It should be clear that it may also include a mixture of such materials. The storage chamber 60 is preferably thermally insulated. This may be achieved by a housing comprising insulated walls, or for example by a layer of earth or other insulating material when chamber 60 is implemented as an excavation. The energy storage device 6 shown in Fig. 7 is a horizontal energy storage device 6 in which the main flow direction through the energy storage device 6 is in a horizontal direction. Alternatively, the energy storage device 6 may be a vertical energy storage device in which the main flow direction through the energy storage device is a vertical direction.

To allow the flow of heat transfer medium through the energy storage device 6, flow channels or heat exchange channels may be provided in the material 62. Such channels may form naturally, for example by inter-spaces between stones making up the material 62. Alternatively, they may also be built into the material 62. Also, the material 62 may be porous, thus forming respective flow channels.

The energy storage device 6 includes the first port 8, which acts as an inlet during the charging mode (receiving hot air from the heater) and acts as an outlet during the discharging mode (exhausting hot transfer medium heated up by material 62). It further comprises the second port 10, which acts as an outlet during the charging mode (exhausting cooled-down heat transfer medium) or as an inlet during the discharging mode (receiving cold heat transfer medium). In operation during the charging mode, hot heat transfer medium enters port 8 at start to heat up the material 62 close to the port, the cooled-down transfer medium being exhausted. This causes a heat front to travel through the material 62 from the hot port 8 towards the cold port 10. When the temperature front reaches a position close to the second port 10, in particular when the temperature at the cold port begins to rise above a predetermined temperature threshold, the charging cycle is complete and the energy storage device 6 is fully charged. Such temperature front is a zone that includes a high temperature gradient in the heat storage material. Such front may separate the heat storage material into a relatively hot or hot zone and a relatively cold or cold zone.

The energy storage device 6 further includes nozzle sections 64 adjacent to the respective ports 8, 10. These nozzle sections have a tapered shape that extends between the respective port and the chamber.

In Fig. 2, the dashed arrows indicate a flow direction of the heat transfer medium corresponding to the charging flow path 28. When operating in the discharging mode, the flow direction of the heat transfer medium is preferably reversed, so that these arrows would be reversed as e.g. shown in Fig. 2 by the dotted arrows. In other embodiments, the flow direction may be kept the same in both modes. The heat transfer medium flows along essentially the same passages through the heat storage material 62 in both charging and discharging modes. Other configurations are conceivable. For example, to achieve a particular temperature distribution, a plurality of first ports 8 and a plurality of second ports 10 may be provided. Also it is conceivable that the ports used by the charging flow path 28 are different from the ports used by the discharging flow path 30.

Fig. 8 is a flow diagram illustrating a method of operating a thermal energy storage system as described herein. The method comprises operating the system 2 in a charging mode in which the heat transfer medium is transported along the charging flow path 28 (method step S1). Further and optionally, the method further comprises controlling at least one of the first and second heat sources 22, 24 such that the heat transfer medium leaving the second heat source 24 has the final temperature, in particular the predetermined charging temperature of the energy storage device 6 (method step S2).

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A thermal energy storage system (2), comprising:
an energy storage device (6) configured to store thermal energy;
a heat source arrangement (21); and
a charging flow path (28) configured to provide thermal energy from the heat source arrangement to the energy storage device (6) via a heat transfer medium, wherein the thermal energy storage system (2) is operable in a charging mode in which the heat transfer medium is transported along the charging flow path (28);
wherein the heat source arrangement (21) comprises a first heat source (22) and a second heat source (24) being arranged in series in the charging flow path (28), wherein the first heat source (22) is configured to heat the heat transfer medium to an intermediate temperature and the second heat source (24) is configured to heat the heat transfer medium leaving the first heat source (22) to a final temperature being higher than the intermediate temperature.

2. The thermal energy storage system according to claim 1, wherein at least one of the first and second heat sources (22, 24) is controllable to provide the final temperature at the outlet of the second heat source (24).

3. The thermal energy storage system according to claim 1 or 2,
wherein the first heat source (22) is at least one of a waste heat source, a solar thermal heat source, a geothermal heat source, a flue gas heat source, or a heat pump, and/or
wherein the second heat source (24) is at least one of a fuel powered heat source, an electrical or a waste heat source, or one or more plasma torches.

4. The thermal energy storage system according to any of the preceding claims, wherein the first heat source (22) is a waste heat source configured to heat the heat transfer medium to the intermediate temperature by waste heat provided to the first heat source (22) from an external system.

5. The thermal energy storage system according to any of the preceding claims, wherein the heat source arrangement (21) comprises a third heat source (26) configured to heat the heat transfer medium to the or another intermediate temperature or to the final temperature, and
wherein the third heat source (26) is arranged, in the charging flow path (28), in parallel to at least one of the first heat source (22) and the second heat source (24).

6. The thermal energy storage system according to claim 5, wherein the third heat source (26) is arranged, in the charging flow path (28), in parallel to the first heat source (22), and wherein the thermal energy storage system (2) comprises a control unit configured to control the system in the charging mode such that the system (2) is operable in at least one, preferably each, of the following heating modes:
- a first serial heating mode in which the heat transfer medium only flows within the heat source arrangement (21) through the first heat source (22) and through the second heat source (24),
- a second serial heating mode in which the heat transfer medium only flows within the heat source arrangement (21) through the third heat source (26) and through the second heat source (24), and
- a parallel heating mode in which a first part of the heat transfer medium flows through the first heat source (22) and a second part of the heat transfer medium flows in parallel through the third heat source (26), and wherein outlets of the first and third heat sources (22,26) are combined such that the first and the second parts mix and the mixed flow flows through the second heat source (24).

7. The thermal energy storage system according to any of the preceding claims, wherein the heat source arrangement (21) comprises a bypass conduit (43) arranged in parallel to the second heat source (24) in the charging flow path (28),
wherein an outlet of the bypass conduit (43) is combined with an outlet of the second heat source (24) and/or fluidly coupled to an inlet of a heat consumer (20),
wherein an inlet of the bypass conduit (43) is fluidly coupled to an outlet of the first heat source (22), or
wherein a third heat source (26) is arranged in parallel to the first heat source (22) in the charging flow path, and the inlet of the bypass conduit (43) is fluidly coupled to an outlet of at least one of the first and third heat sources (22, 26).

8. The thermal energy storage system according to claim 7, comprising a control unit configured to control the system in the charging mode such that the system (2) is operable in at least one, preferably each, of the following heating modes:
- a first bypass heating mode in which a first part of the heat transfer medium flows through the first heat source (22) and a second part of the heat transfer medium flows through the third heat source (26), and the first and second parts bypass the second heat source (24) via the bypass conduit (43),
- a second bypass heating mode in which the first part of the heat transfer medium flows through the first heat source (22) and the second part of the heat transfer medium flows through the third heat source (26), and then the first part of the heat transfer medium flows through the second heat source (24) and the second part of the heat transfer medium flows along the bypass conduit (43), and
- a general bypass heating mode in which the heat transfer medium flows through the bypass conduit (43) and bypasses the second heat source (24).

9. The thermal energy storage system according to claim 7 or 8, wherein a or the control unit is configured to operate the system in a direct heating mode in which thermal energy is provided to a or the heat consumer (20) by directing at least one part of the heat transfer medium flowing through the bypass conduit (43) to a or the heat consumer (20).

10. The thermal energy storage system according to any of the preceding claims, wherein the charging flow path (28) implements a closed cycle that is configured to return the heat transfer medium leaving the energy storage device (6) at least partially back to the heat source arrangement (21) so as to increase the amount of thermal energy comprised in the heat transfer medium.

11. The thermal energy storage system according to any of the preceding claims, wherein the system comprises a discharging flow path (30) configured to provide thermal energy from the energy storage device (6) to a heat consumer (20) via the heat transfer medium, wherein the thermal energy storage system (2) is operable in a discharging mode in which the heat transfer medium is transported along the discharging flow path (30), and
wherein preferably, the discharging flow path (30) implements a closed cycle that is configured to return the heat transfer medium that has provided thermal energy to the heat consumer (20) at least partially back to the energy storage device (6) to take up thermal energy stored in the energy storage device (6).

12. The thermal energy storage system according to any of the preceding claims, wherein the thermal energy storage system (2) further comprises at least one blower (4) configured to convey the heat transfer medium along the charging flow path (28) in the charging mode and/or to convey the heat transfer medium along a discharging flow path (30) in a discharging mode.

13. The thermal energy storage system according to any of the preceding claims, wherein the heat transfer medium is a gaseous medium, in particular air.

14. The thermal energy storage system according to any of the preceding claims, wherein the energy storage device (6) comprises
a storage chamber (60), wherein the storage chamber (60) comprises at least one first port (8) operated as an inlet for the heat transfer medium in the charging mode and as an outlet for the heat transfer medium in a discharging mode and at least one second port (10) operated as an outlet for the heat transfer medium in the charging mode and as an inlet for the heat transfer medium in the discharging mode, and
a heat storage material (62) disposed in the storage chamber (60), wherein the heat storage material (62) has open pores and/or provides flow channels through which the heat transfer medium can flow and exchange thermal energy with the heat storage material (62).

15. A Method of operating a thermal energy storage system (2), wherein the thermal energy storage system (2)comprises:
an energy storage device (6) configured to store thermal energy;
a heat source arrangement (21); and
a charging flow path (28) configured to provide thermal energy from the heat source arrangement to the energy storage device (6) via a heat transfer medium;
wherein the heat source arrangement (21) comprises a first heat source (22) and a second heat source (24) being arranged in series in the charging flow path (28), wherein the first heat source (22) is configured to heat the heat transfer medium to an intermediate temperature and the second heat source (24) is configured to heat the heat transfer medium leaving the first heat source (22) to a final temperature being higher than the intermediate temperature;
wherein the method comprises:
- operating the thermal energy storage system (2) in a charging mode in which the heat transfer medium is transported along the charging flow path (28).
